# EUROPÄISCHE PATENTSCHRIFT

(11) **EP 3 062 997 B1**
(45) Veröffentlichungstag und Bekanntmachung des Hinweises auf die Patenterteilung: **24.10.2018**
(21) Anmeldenummer: 14742542.5
(22) Anmeldetag: 25.07.2014
(51) Int. Cl.: B29D 30/32, B29D 30/26, B29K 105/00

(54) **VERFAHREN ZUR HERSTELLUNG EINES FAHRZEUGREIFENS**
METHOD FOR PRODUCING A VEHICLE TYRE
PROCÉDÉ DE FABRICATION D'UN PNEU DE VÉHICULE

(30) Priorität: 29.10.2013 DE 102013221971
(43) Veröffentlichungstag der Anmeldung: 07.09.2016
(73) Patentinhaber: Continental Reifen Deutschland GmbH, 30165 Hannover (DE)
(72) Erfinder: LINNE, Stefan, 30900 Wedemark (DE); REITMANN, Sebastian, 31558 Hagenburg (DE); GERIGHAUSEN, Martin, 30890 Barsinghausen (DE)
(74) Vertreter: Widjaja, Wira
(86) Internationale Anmeldenummer: PCT/EP2014/066032
(87) Internationale Veröffentlichungsnummer: WO 2015/062755

(56) Entgegenhaltungen:
- EP-A1- 2 508 331
- DE-A1- 1 753 663
- DE-A1- 19 942 220
- JP-A- S57 182 419
- JP-A- 2003 033 977
- JP-A- 2011 101 971

## Beschreibung

Die Erfindung betrifft ein Verfahren zur Herstellung eines Fahrzeugreifens.
Bei herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.
Die Bombiertrommel ist im allgemeinen relativ komplex aufgebaut, da sie mehrere Funktionen erfüllen muss. Es ist bekannt, dass an einer Bombiertrommel sogenannte Pusherglocken eingesetzt werden, die das Hochschlagen der Seitenwände an der Reifenkarkasse unterstützen sollen. Das Hochschlagen und das Verbinden der Seitenwände mit der Reifenkarkasse kann aufgrund verschiedener Gründe mit
Fertigungsungenauigkeiten verbunden sein.
Die DE 199 42 220 A1 offenbart eine herkömmliche Vorrichtung zum Herstellen von Fahrzeugreifen.

Der Erfindung liegt die Aufgabe zugrunde, ein verbessertes Verfahren zur Herstellung von Fahrzeugreifen bereitzustellen.
Durch das Verfahren soll insbesondere das Hochschlagen und Verbinden der Seitenwände mit der Reifenkarkasse verbessert werden.

Gelöst wird die Aufgabe gemäß Anspruch 1 dadurch, dass ein Verfahren mit folgenden Schritten eingesetzt wird:
a) Fertigstellen einer Reifenkarkasse auf einer Karkasstrommel,
b) Verfahren und Positionierung der Reifenkarkasse auf eine Bombiertrommel,
c) Durchführung des Bombiervorganges, wobei die Reifenkarkasse nach radial außen expandiert wird,
d) Hochschlagen der an der Reifenkarkasse angeordneten Seitenwände mit aufblähbaren Bombierbälgen,
e) Seitliches Verfahren von zwei seitlich zur Reifenkarkasse angeordneten Pusherglocken in Richtung Rohlingsmitte,
   wobei die Pusherglocken jeweils auf einem verfahrbaren ersten und zweiten Schlitten gelagert sind und jeweils mit einem ersten und zweiten Antrieb über eine Kopplung in axialer Richtung verfahren werden,
f) Seitliches Andrücken der Pusherglocken gegen die Bombierbälge,
   wobei der Bombierbalg verformt und die hochgeschlagen Seitenwände gegen die Außenseiten der bombierten Reifenkarkasse angedrückt werden,
g) Ausgleichen der Andrück-Positionen der beiden Pusherglocken bei Einstellen eines Kräfteungleichgewichtes auf beiden Seiten der Bombierbälge,
   wobei die Antriebe der Pusherglocken an einem frei gelagerten dritten Schlitten angeordnet sind,
   wobei alle drei Schlitten zusammen frei beweglich zur Rohlingsmitte an einem Schienensystem angeordnet sind,
   wodurch die Seitenwände auf beiden Seiten der Reifenkarkasse gleichmäßig mit der Außenseite der Reifenkarkasse verbunden werden,
h) Fertigstellen des Reifenrohlings mit weiteren Schritten.

Ein Vorteil der Erfindung ist insbesondere darin zu sehen, dass durch das Verfahren die Fertigungsqualität beim Hochschlagen und Verbinden der Seitenwände mit der Reifenkarkasse wesentlich verbessert wird. Aufgrund unterschiedlicher Materialeigenschaften der Bombierbälge kann bei herkömmlichen Herstellungsverfahren ein Kräfteungleichgewicht entstehen, das zum einen den Reifenrohling deformiert und zum anderen die Mechanik des Bombierkopfes bzw. der Bombiertrommel zu stark belastet. Beispielsweise aufgrund eines Alterungsprozesses kann es vorkommen, dass einer der beiden Bombierbälge beim Zusammendrücken mehr aufgebläht wird. Insbesondere durch das Ausgleichen der Andrückposition der beiden Pusherglocken lässt sich das Kräfteungleichgewicht wieder ausgleichen. Alle drei Schlitten sind zusammen frei beweglich zur Rohlingsmitte an einem Schienensystem angeordnet, wodurch von beiden Seiten ein gleichmäßiger Anpressdruck durch die verschobenen Pusherglocken aufgebracht werden kann. Auf diese Weise werden die Seitenwände auf beiden Seiten der Reifenkarkasse gleichmäßig mit der Außenseite der Reifenkarkasse verbunden und damit die Fertigugnsqualität wesentlich verbessert.

In einer vorteilhaften Weiterbildung der Erfindung ist vorgesehen, dass bei Schritt g) beim Ausgleichen des Kräfteungleichgewichtes der Abstand der Pusherglocken zueinander in axialer Richtung im Wesentlichen beibehalten wird.
Dadurch lässt sich auf beiden Seiten der Bombierbälge ein gleichmäßiger Anpressdruck aufbringen.

In einer weiteren vorteilhaften Weiterbildung der Erfindung ist vorgesehen, dass bei Schritt e) die Kopplung der Antriebe für die Pusherglocken jeweils mit einer ersten und zweiten Antriebsspindel erfolgt,
wobei über eine Drehung der Antriebsspindeln die Pusherglocken in axialer Richtung verfahren werden.
Dadurch lassen sich die Pusherglocken mit einer hohen Genauigkeit in axialer Richtung verfahren.

In einer weiteren vorteilhaften Weiterbildung der Erfindung ist vorgesehen, dass alle drei Schlitten an einem Schienensystem mit zwei Führungsschienen angeordnet sind,
wobei die Schlitten in axialer Richtung an den Führungsschienen in Form von einer schwimmenden Lagerung angeordnet sind.
Durch die Verwendung der Führungsschienen lassen sich die Pusherglocken mit einer hohen Genauigkeit in axialer Richtung verfahren. Außerdem lässt sich mit den Führungsschienen die schwimmende Lagerung einfach und mit einer hohen Genauigkeit umsetzen.

In einer weiteren vorteilhaften Weiterbildung der Erfindung ist vorgesehen, dass an dem dritten Schlitten ein Ausgleichsmittel angeordnet ist, wobei bei Schritt g) mit dem Ausgleichsmittel die Verlagerungsbewegung des Mittenversatzes der beiden Pusherglocken in Bezung auf die Rohlingsmitte reguliert wird.
Auf diese Weise wird einer Übersteuerung der Verlagerungsbewegung der Pusherglocken entgegengewirkt.

In einer weiteren vorteilhaften Weiterbildung der Erfindung ist vorgesehen, dass das Ausgleichsmittel ein Servomotor mit einem Kugelgewindetrieb ist.
Mit dem Servomotor und dem Kugelgewindetrieb lässt sich der Ausgleich mit einer hohen Genauigkeit durchführen.

In einer weiteren vorteilhaften Weiterbildung der Erfindung ist vorgesehen, dass der Kugelgewindetrieb über ein koaxial angeordnetes Gewinde mit dem dritten Schlitten gekoppelt ist.
Dadurch lässt sich eine direkte Kraftkopplung mit dem dritten Schlitten erreichen.

In einer weiteren vorteilhaften Weiterbildung der Erfindung ist vorgesehen, dass bei Schritt g) beim Überschreiten eines Grenzwertes für den Mittenversatz der beiden Pusherglocken eine entgegenwirkende Gegenkraft mit dem Servomotor auf den dritten Schlitten aufgebracht wird.
Dadurch wird der Servomotor erst dann aktiviert, wenn ein vorgegebener Mittenversatz überschritten wird.

In einer weiteren vorteilhaften Weiterbildung der Erfindung ist vorgesehen, dass bei Schritt g) der Grenzwert für den Mittenversatz 2 bis 10 mm beträgt.
Bei Erreichen dieses Grenzwertes lässt sich eine optimale Regelung für den Servomotor einsetzen.

In einer weiteren vorteilhaften Weiterbildung der Erfindung ist vorgesehen, dass bei Schritt g) die Wegmessung des Mittenversatzes der Pusherglocken mit einem im Servomotor angeordneten Sensor erfolgt.
Dadurch lässt sich der Mittenversatz der Pusherglocken mit dem Servomotor einfacher regeln.

In einer weiteren vorteilhaften Weiterbildung der Erfindung ist vorgesehen, dass bei Schritt g) jeweils die Abstände der Pusherglocken zu einander und die Abstände der Pusherglocken im Verhältnis zur Rohlingsmitte gemessen, überwacht und/oder geregelt werden.
Auf diese Weise lässt sich eine optimale Regelung des Mittenversatzes der Pusherglocken erzielen.

Anhand eines Ausführungsbeispieles soll die Erfindung näher erläutert werden. Es zeigen:

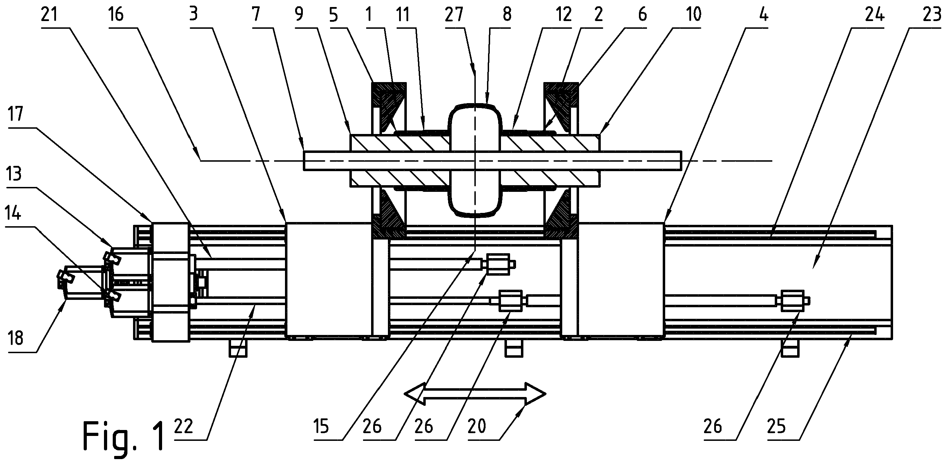

- Figuren 1 bis 3:: ein Ausführungsbeispiel des Verfahrens.

Die Figur 1 zeigt die Bombierstation mit der Bombiertrommel und dem linken und rechten Bombierkopf 9 und 10 in einer Schnittansicht. Die Reifenkarkasse 8 ist in einem bombierten Zustand dargestellt und wird durch die Bombierköpfe 9 und 10 gehalten. Die linke und rechte Seitenwand 11 und 12 liegen jeweils auf einem linken und einem rechten Bombierbalg 5 und 6 auf, wobei die Bombierbälge im nicht aufgeblähten Zustand dargestellt sind. Denkbar ist ebenfalls, dass über den Seitenwänden 11 und 12 noch ein Einlagenende aufliegt, welches ebenfalls mit den Seitenwänden hochgeschlagen werden soll. Auf beiden Seiten der Reifenkarkasse 8 sind jeweils eine linke Pusherglocke 1 und eine rechte Pusherglocke 2 in einer Warteposition angeordnet. Die Bombiertrommel wird insbesondere durch die Trommelwelle 7 angetrieben, die um die Mittelachse 16 der Trommelwelle rotiert. Die Pusherglocken 5 und 6 sind jeweils auf einem verfahrbaren Schlitten 3 und 4 angeordnet. Die Schlitten werden über das Schienensystem 23 mit einer oberen Führungsschiene 24 und einer unteren Führungsschiene 25 gehalten. Die beiden Schlitten 3 und 4 werden in axialer Richtung 20 aufeinander zubewegt, um dadurch das Hochschlagen der Seitenwände zu unterstützen. Der Antrieb des zweiten Schlittens 3 erfolgt mit dem Antrieb 13 über die Antriebsspindel 21. Die Antriebsspindel 21 wird auf der gegenüberliegenden Seite durch eine Lagerung 26 gehalten. Bei Rotation der Antriebsspindel 21 bewegt sich der Schlitten 3 in axialer Richtung 20 nach links oder nach rechts. Bei einer Rotationsbewegung der Antriebsspindel 22 bewegt sich der Schlitten 4 ebenfalls nach links oder rechts in axialer Richtung 20. Die Antriebsspindel 22 ist durch den Schlitten 3 hindurchgeführt und an zwei Stellen über die Lagerung 26 gelagert. Die Antriebsspindel 22 wird von dem Servomotor 14 angetrieben. Die Servomotoren 13 und 14 sind mit den Antriebsspindeln 21 und 22 auf einem dritten Schlitten 17 gelagert. Dieser dritte Schlitten 17 ist wiederum beweglich am Schienensystem 23 in axialer Richtung beweglich angeordnet. Auf diese Weise sind alle drei Schlitten 17, 3 und 4 zusammen beweglich zur Rohlingsmitte 15 angeordnet. Dadurch wird eine schwimmende Lagerung der beiden Pusherglocken 1 und 2 in Bezug auf die Rohlingsmitte 15 realisiert. Der Servomotor 18 ist am dritten Schlitten 17 angeordnet und hat die Funktion eines Ausgleichsmittels bei einer Übersteuerung des Mittenversatzes von linker oder rechter Pusherglocke 1 und 2.

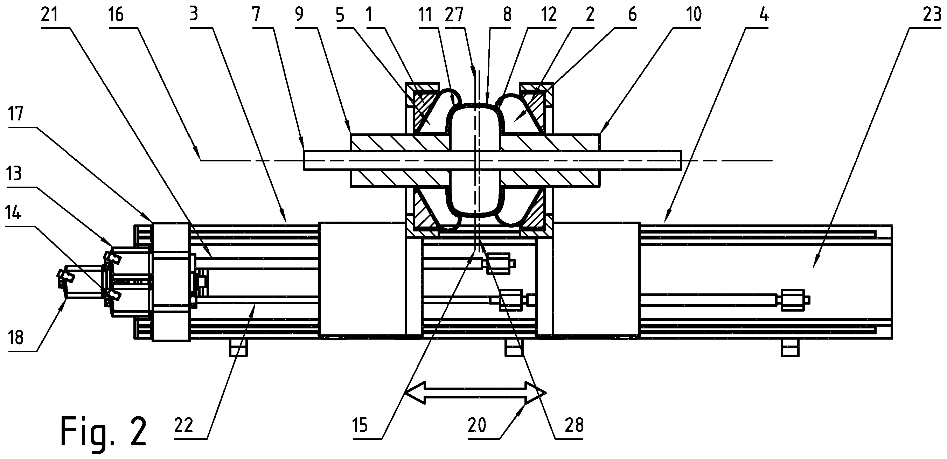

Die Figur 2 zeigt den Verfahrensschritt, bei dem die Seitenwände 11 und 12 mit den aufgeblähten Bombierbälgen 5 und 6 an der Reifenkarkasse 8 hochgeschlagen werden. Bei diesem Vorgang werden die beiden Pusherglocken 1 und 2 in axialer Richtung zur Rohlingsmitte 15 verfahren, so dass die Pusherglocken gegen die aufgeblähten Bombierbälge drücken und dadurch die oberen Enden der Seitenwände ebenfalls gegen die Reifenkarkasse 8 gedrückt werden. In der Figur ist ein Zustand dargestellt, bei dem aufgrund einer unterschiedlichen Beschaffenheit der Bälge sich ein Kräfteungleichgewicht eingestellt hat. Der linke Seitenbombierbalg 5 lässt sich mehr zusammendrücken als der rechte Bombierbalg 6. Aufgrund dieses Kräfteungleichgewichtes erfolgt ein Mittenversatz der beiden Pusherglocken 1 und 2 in Bezug auf die ursprüngliche Rohlingsmitte 15. Durch diesen Ausgleich des Mittenversatzes wandert die Symetrielinie der Pusherglocken 27 nach dem Mittenversatz in axialer Richtung 20 nach links. Bei diesem Vorgang wird der Abstand in axialer Richtung zwischen den beiden Pusherglocken 1 und 2 im Wesentlichen beibehalten. Der Mittenversatz der beiden Pusherglocken 1 und 2 erfolgt durch die schwimmende Lagerung der drei Schlitten, die am Schienensystem 23 angeordnet sind. Bei dem Mittenversatz bewegen sich alle drei Schlitten 17, 3 und 4 in gleicher Richtung, wobei der Abstand zueinander beibehalten wird. Alle drei Schlitten sind durch das Schienensystem 23 und durch die Antriebsspindeln 21 und 22 miteinander in ihrer Bewegung gekoppelt.
Mit dem Servomotor 18 lässt sich der Mittenversatz bei einer Übersteuerung regeln. Die Figur 2 zeigt im wesentlichen den Zustand, bei dem das Kräftegleichgewicht wieder hergestellt ist. Die beiden Pusher 1 und 2 sind asymmetrisch zur Rohlingsmitte 15 positioniert, und die Bombierbälge erheben sich unterschiedlich um den dargestellten Reifenrohling herum. Im Normalfall ist diese Art von Ausgleich optimal einsetzbar, um die Seitenwände auf beiden Seiten gleichmäßig hochschlagen zu können. Ist jedoch der Kraftunterschied auf beiden Seiten zu groß, kann es passieren, dass die Seitenwand 12 auf der Seite mit dem stärkeren Anpressdruck nicht komplett hochgeschlagen wird. Oder aber es kann der Fall eintreten, dass die Pusherglocke 1 auf der Seite mit dem schwächeren Druck gegen die Karkasse 8 verdrückt wird. Um einem solchen Zustand entgegenzuwirken, ist am dritten Schlitten ein Servomotor 18 als Ausgleichsmittel angeordnet.

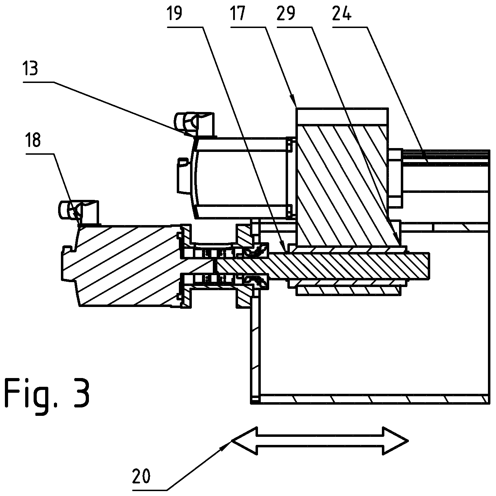

Die Figur 3 zeigt den Servomotor 18 mit dem Kugelgewindetrieb 19. Mit dem Kugelgewindetrieb 19 lässt sich eine Gegenkraft zum dritten Schlitten 17 aufbringen. Mit dieser Gegenkraft lässt sich einer Übersteuerung des Mittenversatzes entgegenwirken. Koaxial zum Kugelgewindetrieb 19 ist ein Gewinde 29 angeordnet, welches mit dem dritten Schlitten 17 verbunden ist. Der dritte Schlitten 17 ist frei beweglich an der oberen Schiene 24 angeordnet.

### Bezugszeichenliste

### (ist Teil der Beschreibung)

- 1: Linke Pusherglocke
- 2: Rechte Pusherglocke
- 3: Zweiter Schlitten
- 4: Dritter Schlitten
- 5: Linker Bombierbalg für Seitenwand und/oder Karkasseinlagenende
- 6: rechter Bombierbalg für Seitenwand und/oder Karkasseinlagenende
- 7: Welle für Bombiertrommel
- 8: bombierte Reifenkarkasse
- 9: linker Bombierkopf
- 10: rechter Bombierkopf
- 11: linke Seitenwand
- 12: rechte Seitenwand
- 13: Antrieb für zweiten Schlitten
- 14: Antrieb für ersten Schlitten
- 15: Rohlingsmitte in der Ausgangsposition
- 16: Mittelachse der Trommelwelle
- 17: Dritter Schlitten
- 18: Servomotor für den dritten Schlitten
- 19: Kugelgewindetrieb
- 20: Axiale Richtung
- 21: Zweite Antriebspindel für zweiten Schlitten
- 22: Erste Antriebspindel für ersten Schlitten
- 23: Schienensystem
- 24: Obere Führungsschiene
- 25: Untere Führungsschiene
- 26: Lagerungen für Antriebsspindeln
- 27: Ursprüngliche Symetrielinie der Pusherglocken
- 28: Symetrielinie der Pusherglocken nach Mittenversatz
- 29: Gewinde

## Patentansprüche

1. Verfahren zur Herstellung eines Fahrzeugreifens mit einer Reifenkarkasse (8), Reifenwülsten mit Kernen, einem Reifengürtel und einem Laufstreifen mit folgenden Schritten:
a) Fertigstellen einer Reifenkarkasse (8) auf einer Karkasstrommel,
b) Verfahren und Positionierung der Reifenkarkasse (8) auf eine Bombiertrommel,
c) Durchführung des Bombiervorganges, wobei die Reifenkarkasse (8) nach radial außen expandiert wird,
d) Hochschlagen der an der Reifenkarkasse (8) angeordneten Seitenwände (11, 12) mit aufblähbaren Bombierbälgen (5, 6),
e) Seitliches Verfahren von zwei seitlich zur Reifenkarkasse (8) angeordneten Pusherglocken (1, 2) in Richtung Rohlingsmitte (15),
wobei die Pusherglocken (1, 2) jeweils auf einem verfahrbaren ersten und zweiten Schlitten (3, 4) gelagert sind und jeweils mit einem ersten und zweiten Antrieb (13, 14) über eine Kopplung in axialer Richtung (20) verfahren werden,
f) Seitliches Andrücken der Pusherglocken (1, 2) gegen die Bombierbälge (5, 6), wobei der Bombierbalg (5, 6) verformt und die hochgeschlagen Seitenwände (11, 12) gegen die Außenseiten der bombierten Reifenkarkasse (8) angedrückt werden,
g) Ausgleichen der Andrück-Positionen der beiden Pusherglocken (1, 2) bei Einstellen eines Kräfteungleichgewichtes auf beiden Seiten der Bombierbälge (5, 6),
wobei die Antriebe (13, 14) der Pusherglocken (1, 2) an einem frei gelagerten dritten Schlitten (17) angeordnet sind,
wobei alle drei Schlitten (3, 4, 17) zusammen frei beweglich zur Rohlingsmitte (15) an einem Schienensystem (23) angeordnet sind,
wodurch die Seitenwände (5, 6) auf beiden Seiten der Reifenkarkasse (8) gleichmäßig mit der Außenseite der Reifenkarkasse (8) verbunden werden,
h) Fertigstellen des Reifenrohlings mit weiteren Schritten.

2. Verfahren nach Anspruch 1,
**dadurch gekennzeichnet, dass**
bei Schritt g) beim Ausgleichen des Kräfteungleichgewichtes der Abstand der Pusherglocken (1, 2) zueinander in axialer Richtung (20) im Wesentlichen beibehalten wird.

3. Verfahren nach einem der vorhergehenden Ansprüche,
**dadurch gekennzeichnet, dass**
bei Schritt e) die Kopplung der Antriebe (1, 2) für die Pusherglocken jeweils mit einer ersten und zweiten Antriebsspindel (21, 22) erfolgt,
wobei über eine Drehung der Antriebsspindeln (21, 22) die Pusherglocken in axialer Richtung (20) verfahren werden.

4. Verfahren nach einem der vorhergehenden Ansprüche,
**dadurch gekennzeichnet, dass**
alle drei Schlitten (3, 4, 17) an einem Schienensystem (23) mit zwei Führungsschienen (24, 25) angeordnet sind,
wobei die Schlitten (3, 4, 17) in axialer Richtung (20) an den Führungsschienen (24, 25) in Form von einer schwimmenden Lagerung angeordnet sind.

5. Verfahren nach einem der vorhergehenden Ansprüche,
**dadurch gekennzeichnet, dass**
an dem dritten Schlitten (17) ein Ausgleichsmittel angeordnet ist,
wobei bei Schritt g) mit dem Ausgleichsmittel (17) die Verlagerungsbewegung des Mittenversatzes der beiden Pusherglocken (1, 2) in Bezung auf die Rohlingsmitte (15) reguliert wird.

6. Verfahren nach Anspruch 5,
**dadurch gekennzeichnet, dass**
das Ausgleichsmittel ein Servomotor (18) mit einem Kugelgewindetrieb (19) ist.

7. Verfahren nach Anspruch 6,
**dadurch gekennzeichnet, dass**
der Kugelgewindetrieb (19) über ein koaxial angeordnetes Gewinde (29) mit dem dritten Schlitten (17) gekoppelt ist.

8. Verfahren nach einem der vorhergehenden Ansprüche,
**dadurch gekennzeichnet, dass**
bei Schritt g) beim Überschreiten eines Grenzwertes für den Mittenversatz der beiden Pusherglocken (1, 2) eine entgegenwirkende Gegenkraft mit dem Servomotor (18) auf den dritten Schlitten (17) aufgebracht wird.

9. Verfahren nach einem der vorhergehenden Ansprüche,
**dadurch gekennzeichnet, dass**
bei Schritt g) der Grenzwert für den Mittenversatz 2 bis 10 mm beträgt.

10. Verfahren nach einem der vorhergehenden Ansprüche,
**dadurch gekennzeichnet, dass**
bei Schritt g) die Wegmessung des Mittenversatzes der Pusherglocken (1, 2) mit einem im Servomotor (18) angeordneten Sensor erfolgt.

11. Verfahren nach einem der vorhergehenden Ansprüche,
**dadurch gekennzeichnet, dass**
bei Schritt g) jeweils die Abstände der Pusherglocken (1, 2) zu einander und die Abstände der Pusherglocken (1, 2) im Verhältnis zur Rohlingsmitte (15) gemessen, überwacht und/oder geregelt werden.

## Claims

1. Method for producing a vehicle tire with a tire carcass (8), tire beads with cores, a tire belt and a tread strip having the following steps:
a) finishing of a tire carcass (8) on a carcass drum,
b) moving and positioning of the tire carcass (8) onto a shaping drum,
c) carrying out of the shaping operation, the tire carcass (8) being expanded radially to the outside,
d) turning up of the sidewalls (11, 12) which are arranged on the tire carcass (8) by way of inflatable shaping bladders (5, 6),
e) lateral moving of two pusher bells (1, 2) which are arranged laterally with respect to the tire carcass (8) in the direction of the blank center (15),
the pusher bells (1, 2) being mounted in each case on a movable first and second carriage (3, 4) and being moved in the axial direction (20) in each case by way of a first and second drive (13, 14) via a coupling,
f) lateral pressing of the pusher bells (1, 2) against the shaping bladders (5, 6),
the shaping bladder (5, 6) being deformed and the turned up sidewalls (11, 12) being pressed against the outer sides of the shaped tire carcass (8),
g) balancing of the pressing positions of the two pusher bells (1, 2) if a force imbalance is set on both sides of the shaping bladders (5, 6),
the drives (13, 14) of the pusher bells (1, 2) being arranged on a freely mounted third carriage (17),
all three carriages (3, 4, 17) being arranged on a rail system (23) such that they can be freely moved together to the blank center (15),
as a result of which the sidewalls (5, 6) on both sides of the tire carcass (8) are connected uniformly to the outer side of the tire carcass (8),
h) finishing of the tire blank by way of further steps.

2. Method according to Claim 1,
**characterized in that**,
during the balancing of the force imbalance in step g), the spacing of the pusher bells (1, 2) from one another in the axial direction (20) is substantially maintained.

3. Method according to either of the preceding patent claims,
**characterized in that**,
in step e), the drives (1, 2) for the pusher bells are coupled in each case by way of a first and second drive spindle (21, 22),
the pusher bells being moved in the axial direction (20) via a rotation of the drive spindles (21, 22).

4. Method according to one of the preceding patent claims,
**characterized in that**
all three carriages (3, 4, 17) are arranged on a rail system (23) with two guide rails (24, 25),
the carriages (3, 4, 17) being arranged in the axial direction (20) on the guide rails (24, 25) in the form of a floating mounting.

5. Method according to one of the preceding patent claims,
**characterized in that**
a balancing means is arranged on the third carriage (17),
the displacement movement of the center offset of the two pusher bells (1, 2) in relation to the blank center (15) being regulated by way of the balancing means (17) in step g).

6. Method according to Claim 5,
**characterized in that**
the balancing means is a servomotor (18) with a ball screw drive (19).

7. Method according to Claim 6,
**characterized in that**
the ball screw drive (19) is coupled to the third carriage (17) via a coaxially arranged thread (29).

8. Method according to one of the preceding patent claims,
**characterized in that**,
in step g), a counteracting counterforce is applied to the third carriage (17) by way of the servomotor (18) if a limit value for the center offset of the two pusher bells (1, 2) is exceeded.

9. Method according to one of the preceding patent claims,
**characterized in that**,
in step g), the limit value for the center offset is from 2 to 10 mm.

10. Method according to one of the preceding patent claims,
**characterized in that**,
in step g), the distance measurement of the center offset of the pusher bells (1, 2) takes place by way of a sensor which is arranged in the servomotor (18).

11. Method according to one of the preceding patent claims,
**characterized in that**,
in step g), in each case the spacings of the pusher bells (1, 2) from one another and the spacings of the pusher bells (1, 2) in relation to the blank center (15) are measured, monitored and/or regulated.

## Revendications

1. Procédé de fabrication d'un pneu de véhicule, comprenant une carcasse de pneu (8), des talons de pneu avec des tringles, une ceinture de pneu et une bande de roulement, comprenant les étapes suivantes :
a) fabrication définitive d'une carcasse de pneu (8) sur un tambour de carcasse,
b) déplacement et positionnement de la carcasse de pneu (8) sur un tambour de bombage,
c) réalisation de l'opération de bombage, la carcasse de pneu (8) étant expansée radialement vers l'extérieur,
d) redressement des parois latérales (11, 12) disposées au niveau de la carcasse de pneu (8) avec des soufflets de bombage gonflables (5, 6),
e) déplacement latéral de deux cloches de poussoir (1, 2) disposées latéralement par rapport à la carcasse de pneu (8) dans la direction du centre de la pièce brute (15),
les cloches de poussoir (1, 2) étant chacune supportées sur un premier et un deuxième chariot déplaçable (3, 4) et étant à chaque fois déplacées dans la direction axiale (20) avec un premier et un deuxième entraînement (13, 14) par le biais d'un accouplement,
f) pressage latéral des cloches de poussoir (1, 2) contre les soufflets de bombage (5, 6), le soufflet de bombage (5, 6) étant déformé et les parois latérales redressées (11, 12) étant pressées contre les côtés extérieurs de la carcasse de pneu bombée (8),
g) équilibrage des positions de pressage des deux cloches de poussoir (1, 2) avec ajustement d'un déséquilibre des forces des deux côtés des soufflets de bombage (5, 6), les entraînements (13, 14) des cloches de poussoir (1, 2) étant disposés au niveau d'un troisième chariot (17) monté librement,
tous les trois chariots (3, 4, 17) étant disposés ensemble de manière librement déplaçable par rapport au centre de la pièce brute (15) sur un système de rails (23),
de sorte que les parois latérales (5, 6) des deux côtés de la carcasse du pneu (8) soient connectées uniformément au côté extérieur de la carcasse du pneu (8),
h) fabrication définitive de la pièce brute de pneu par d'autres étapes.

2. Procédé selon la revendication 1,
**caractérisé en ce**
**qu'**à l'étape g), lors de l'équilibrage du déséquilibre des forces, la distance entre les cloches de poussoir (1, 2) dans la direction axiale (20) est essentiellement conservée.

3. Procédé selon l'une quelconque des revendications précédentes,
**caractérisé en ce**
**qu'**à l'étape e), l'accouplement des entraînements (1, 2) pour les cloches de poussoir s'effectue à chaque fois avec une première et une deuxième broche d'entraînement (21, 22),
les cloches de poussoir étant déplacées dans la direction axiale (20) par le biais d'une rotation des broches d'entraînement (21, 22).

4. Procédé selon l'une quelconque des revendications précédentes,
**caractérisé en ce que**
tous les trois chariots (3, 4, 17) sont disposés sur un système de rails (23) avec deux rails de guidage (24, 25),
les chariots (3, 4, 17) étant disposés dans la direction axiale (20) sur les rails de guidage (24, 25) sous la forme d'un support sur palier flottant.

5. Procédé selon l'une quelconque des revendications précédentes,
**caractérisé en ce**
**qu'**un moyen d'équilibrage est disposé sur le troisième chariot (17),
à l'étape g), le mouvement de déplacement du décalage central des deux cloches de poussoir (1, 2) par rapport au centre de la pièce brute (15) est régulé avec le moyen d'équilibrage (17).

6. Procédé selon la revendication 5,
**caractérisé en ce que**
le moyen d'équilibrage est un servomoteur (18) avec un entraînement à vis à billes (19).

7. Procédé selon la revendication 6,
**caractérisé en ce que**
l'entraînement à vis à billes (19) est accouplé au troisième chariot (17) par le biais d'un filetage (29) disposé coaxialement.

8. Procédé selon l'une quelconque des revendications précédentes,
**caractérisé en ce**
**qu'**à l'étape g), lors du dépassement d'une valeur limite pour le décalage central des deux cloches de poussoir (1, 2), une force antagoniste agissant en sens opposé est appliquée avec le servomoteur (18) sur le troisième chariot (17).

9. Procédé selon l'une quelconque des revendications précédentes,
**caractérisé en ce**
**qu'**à l'étape g), la valeur limite pour le décalage central est de 2 à 10 mm.

10. Procédé selon l'une quelconque des revendications précédentes,
**caractérisé en ce**
**qu'**à l'étape g), la mesure de la course du décalage central des cloches de poussoir (1, 2) s'effectue avec un capteur disposé dans le servomoteur (18).

11. Procédé selon l'une quelconque des revendications précédentes,
**caractérisé en ce**
**qu'**à l'étape g), à chaque fois les distances entre les cloches de poussoir (1, 2) et les distances des cloches de poussoir (1, 2) par rapport au centre de la pièce brute (15) sont mesurées, contrôlées et/ou régulées.
